**Europäisches Patentamt**

**European Patent Office**

**Office européen des brevets**

(19)

(11) Veröffentlichungsnummer : **0 506 985 B1**

(12)

# EUROPÄISCHE PATENTSCHRIFT

(45) Veröffentlichungstag der Patentschrift :
**01.03.95 Patentblatt 95/09**

(51) Int. Cl.$^6$ : **H02P 1/30**

(21) Anmeldenummer : **91104576.3**

(22) Anmeldetag : **22.03.91**

(54) **Blockierdiagnose-Verfahren und Vorrichtung zur Durchführung des Verfahrens.**

(43) Veröffentlichungstag der Anmeldung :
**07.10.92 Patentblatt 92/41**

(45) Bekanntmachung des Hinweises auf die
Patenterteilung :
**01.03.95 Patentblatt 95/09**

(84) Benannte Vertragsstaaten :
**DE FR GB IT**

(56) Entgegenhaltungen :
**EP-A- 0 217 954**
**DE-A- 3 048 097**

(56) Entgegenhaltungen :
**GB-A- 2 176 667**
**AUTOMATISIERUNGSTECHNISCHE PRAXIS -
ATP, Bd. 32, Nr. 7, Juli 1990, MÜNCHEN, DE,
Seiten 372 - 376; H. Schierling:
"Selbstinbetriebnahme - eine neue Eigenschaft moderner Drehstromantriebe"**

(73) Patentinhaber : **SIEMENS
AKTIENGESELLSCHAFT
Wittelsbacherplatz 2
D-80333 München (DE)**

(72) Erfinder : **Schumann, Horst, Dipl.-Ing.
Heinestrasse 8
W-8557 Eggolsheim (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf ein Blockierdiagnose-Verfahren für eine mit einer stromeinprägenden oder spannungseinprägenden Regelanordnung versehene umrichtergespeiste Induktionsmaschine ohne Drehzahlerfassung und auf eine Vorrichtung zur Durchführung des Verfahrens.

Für eine interne und externe Frequenz-/Drehzahlsollwertvorgabe ist ein Umrichter mit einem Hochlaufgeber versehen, der wenigstens eine Hochlaufgeber-Kennlinie enthält. Bei einem komfortablen Hochlaufgeber können Hoch- und Rücklaufzeiten getrennt voneinander eingestellt werden. Außerdem kann die Kennlinie einstellbare Verweilzeiten beim Beschleunigen und Bremsen aufweisen, wobei die Übergänge mit einstellbarer Zeitkonstante verwendet werden können.

Während eines Frequenzhochlaufs wird die Sollfrequenz gesteuert vorgegeben. Bei einer Umschaltfrequenz bzw. Mindestfrequenz, wobei diese Frequenz gleich einige Prozent der Nennfrequenz der gespeisten Induktionsmaschine sein kann, ist der gesteuerte Hochlauf beendet und es wird in einen geregelten Betrieb umgeschaltet, d.h., die Frequenz wird in diesem Bereich geregelt.

Bisher stellte sich bei einem Frequenzhochlauf nun folgendes Problem dar:

Ist die Maschine bei der Umschaltung in den geregelten Betrieb gekippt (z.B. Hochlauf mit gesteuerter Frequenzvorgabe zu schnell) bzw. blockiert, fällt die Regelung des Umrichters wieder in den gesteuerten Betrieb zurück. Anschließend wird die Frequenz wieder gesteuert hochgefahren, bis die Umschaltung in den geregelten Betrieb erfolgt. Ist die Maschine immer noch blockiert, fällt die Regelung wieder in den gesteuerten Bereich zurück. Ändert sich am Zustand der Maschine nichts oder wird die Hochlaufgeber-Kennlinie nicht abgeändert, wiederholt sich der Hochlaufvorgang immer wieder. Da jeder Hochlauf die Maschine thermisch belastet, wird bei Erreichen einer maximalen Temperatur der Hochlauf unterbunden.

Aus der DE 30 48 097 C2 ist ein Regelverfahren für tacholose, umrichtergespeiste Asynchronmaschinenantriebe bekannt. Bei diesem Regelverfahren wird nach dem Anfahren die Drehzahl über die Frequenz des speisenden Umrichters und der Maschinenfluß mittels einer Regelanordnung zur Regelung der Maschinenspannung über einen unterlagerten Stromregelkreis vorgegeben. Für den Anfahrvorgang im Frequenzbereich von Null bis zu einer einstellbaren Grenzfrequenz wird von der Spannungsregelung mit unterlagerter Stromregelung auf eine reine Stromregelung bei stillgelegtem Spannungsregler übergegangen. Durch dieses Regelverfahren ist für die Einstellung eines Anfahrmomentes nur noch eine Größe, nämlich der Stromsollwert, maßgeblich. Die Einstellung des Anfahrmomentes ist damit sehr einfach und kann auch von ungeschultem Personal vorgenommen werden.

Bei Arbeitsmaschinen mit großen Gegenmomenten im Anfahrbereich, die auf Haftreibung zurückzuführen sind, läuft der Antrieb beim ersten Start trotz maximaler Stromamplitude häufig nicht an. Es ist oft notwendig, daß mehrere Anlaufversuche gestartet werden, bis sich die Arbeitsmaschine losreißt. Auch für dieses Problem ist aus der obengenannten Patentschrift ein Regelverfahren bekannt. Bei diesem Regelverfahren wird jedesmal bei Erreichen der Grenzfrequenz überprüft, ob die Drehzahl der Maschine der vorgegebenen Frequenz gefolgt oder ob die Maschine gekippt ist, wobei bei gekippter Maschine die Frequenz auf Null zurückgesetzt und ein erneuter Hochlaufversuch gestartet wird. Bei nicht hochgelaufener, d.h. gekippter Maschine, fordert nach dem Übergang in den geregelten Betrieb der Spannungsregler Stromwerte an, die über dem Maximalstrom des Umrichters liegen. Ist dies der Fall, wird durch einen überlagerten Überlastregler die Frequenz erniedrigt. Falls die Stromanforderung des Spannungsreglers trotz dieser Frequenzerniedrigung innerhalb eines Frequenzbandes nicht zurückgeht, ist die Maschine gekippt. Diese Informationen werden ausgewertet und in Schaltbefehle zur Frequenz-Nullsetzung und neuem Start umgesetzt. Das Rücksetzen erfolgt solange, bis der Antrieb hochgelaufen ist oder der Zyklus durch einen peripheren Steuerbefehl unterbrochen wird.

Mittels diesem Regelverfahren wird das eingangs beschriebene Problem beim Frequenzhochlauf nicht behoben, weil der Zustand "Maschine gekippt" bzw. "Maschine blockiert" erst im geregelten Betrieb erkannt wird.

Aus der GB 2 176 667 A ist ein Blockierdiagnose-Verfahren und eine Vorrichtung zur Durchführung dieses Verfahrens für einen spannungseinprägenden Umrichter bekannt, der eine Induktionsmaschine ohne Drehzahlerfassung speist. Die Regelanordnung dieses spannungseinprägenden Umrichters besteht aus einer Frequenzsteuereinrichtung, einer Spannungsüberwachungsschaltung und einer Hochlaufschaltung, bestehend aus einer Startereinrichtung mit nachgeschalteter Frequenzerhöhungsschaltung. Die Spannungsüberwachungsschaltung erzeugt in Abhängigkeit eines Referenzwertes ein Frequenzkorrektur-Signal, wobei die Frequenzsteuereinrichtung proportional zur Spannungsänderung ein Frequenzsteuersignal für den Wechselrichter erzeugt. Die Vorrichtung zur Durchführung eines Blockierdiagnose-Verfahrens besteht aus einem Stromsensor, der im Spannungszwischenkreis angeordnet ist, einer Recheneinheit, die den Stromwert in einen proportionalen Frequenzwert umrechnet, und einem Komparator, an dessen nichtinvertierenden Eingang dieser berechnete Frequenzwert und an dessen invertierenden Eingang ein gemessener Frequenzwert des Wechselrichters anstehen. Sind diese beiden Frequenzwerte nicht gleich, so erzeugt der Komparator ein Signal, das den Zustand festgebremster Läufer anzeigt. Dieses Signal ist der Hochlaufschaltung zugeführt, die daraufhin den Hochlaufvorgang nochmals startet.

Der Erfindung liegt nun die Aufgabe zugrunde, ein Verfahren und eine Vorrichtung zur Feststellung des Betriebszustandes "Maschine blockiert" anzugeben, wobei diese Feststellung vor der Umschaltung vom gesteuerten in einen geregelten Betrieb getroffen werden soll, so daß ein Umschalten unterbunden werden kann.

Diese Aufgabe wird erfindungsgemäß gelöst mit den Merkmalen des Anspruchs 1.

Dadurch, daß anhand einer weiteren Zustandsgröße der Induktionsmaschine, die mittels einer Plausibilitätsbeziehung mit der gesteuerten bzw. geregelten Zustandsgröße verknüpft ist, kann das erfindungsgemäße Blockierdiagnose-Verfahren für jede Umrichterart und für jede Regelanordnung einfach angepaßt werden. D.h., wenn man die gesteuerte oder geregelte Zustandsgröße der Induktionsmaschine kennt, so steht die weitere Zustandsgröße ebenfalls fest, dessen Wert bzw. deren Werte während des Hochlaufvorganges innerhalb einer Prüfroutine überprüft werden. Diese Überprüfung stellt fest, ob der Antrieb dem gesteuerten Sollwert gefolgt ist oder nicht. Das Ergebnis dieser Überprüfung steht bereits vor der Umschaltung fest, so daß bei negativer Feststellung die Umschaltung unterbunden wird. Da bei der Überprüfung aus den Zustandsgrößen des Motors nur eine Binärinformation gewonnen wird, sind die Anforderungen an die Genauigkeit der Ermittlung der weiteren Zustandsgröße geringer als bei einer Regelung.

Bei einem vorteilhaften Verfahren findet die Überprüfung auf Blockierung während des Hochlaufvorganges bei Frequenzen statt, die kleiner sind, als die Kippfrequenz der umrichtergespeisten Maschine. Dadurch wird nicht nur der Zustand "Maschine blockiert" erkannt, sondern es wird ein Kippen der Maschine völlig verhindert, da bevor die Maschine kippen kann, entschieden worden ist, ob in den geregelten Betrieb umgeschaltet werden kann.

Weitere Verfahrensvarianten, bei denen sich nur die Überprüfungskriterien unterscheiden, da die mittels einer Plausibilitätsbeziehung verbundenen Zustandsgrößen unterschiedlich sind, sind den Ansprüchen 2 bis 5 zu entnehmen.

Als vorteilhafte Vorrichtung zur Durchführung des Blockierdiagnose-Verfahrens ist ein Mikrocomputer vorgesehen, der eingangsseitig einerseits mit dem Ausgang des Hochlaufgebers und andererseits mit einer Meßeinrichtung zur Ermittlung des Istwertes einer Zustandsgröße der umrichtergespeisten Induktionsmaschine und ausgangsseitig mit einer Auswerteeeinrichtung verknüpft ist.

Bei einer weiteren vorteilhaften Vorrichtung sind mehrere Blockierdiagnose-Verfahren, die sich nur im Überprüfungskriterium unterscheiden, abgespeichert, die in Abhängigkeit der mittels einer Plausibilitätsbeziehung verknüpften Zustandsgrößen kodiert sind. Bei Inbetriebnehmen können durch Eingabe der Zustandsgrößen jeweils das entsprechende Programm aktiviert werden, wodurch die Anpassung auch von nicht besonders geschultem Personal vorgenommen werden kann.

Zur weiteren Erläuterung der Erfindung wird auf die Zeichnung Bezug genommen, in der Ausführungsbeispiele des erfindungsgemäßen Blockierdiagnose-Verfahrens schematisch veranschaulicht sind.

| | |
|---|---|
| Figur 1 | zeigt ein Blockschaltbild einer umrichtergespeisten Induktionsmaschine, die |
| Figuren 2 und 3 | zeigen jeweils ein Ablaufdiagramm, das die Arbeitsweise des erfindungsgemäßen Verfahren wiedergibt, in |
| Figur 4 | ist der Frequenzverlauf des Hochlaufvorgangs in einem Diagramm über der Zeit t veranschaulicht, die |
| Figuren 5 und 6 | zeigen jeweils den Verlauf des Spannungsbetrages der Induktionsmaschine während des Hochlaufvorgangs bei freier und blockierter Maschine in einem Diagramm über der Zeit t, in |
| Figur 7 | ist der Verlauf des Spannungsbetrages der Induktionsmaschine während des Hochlaufvorgangs in einem Diagramm über der Zeit t dargestellt, die |
| Figur 8 | zeigt den Frequenzverlauf des Hochlaufvorgangs in einem Diagramm Über der Zeit t und in |
| Figur 9 | ist der Verlauf des Stromes der blockierten Induktionsmaschine in einem Diagramm über der Zeit t veranschaulicht. |

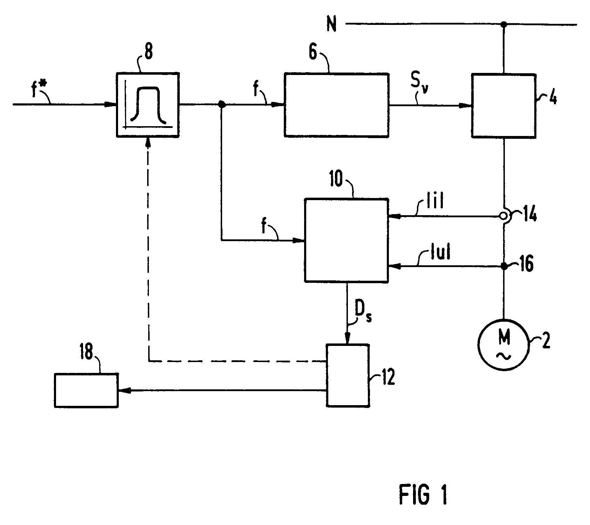

Die Figur 1 zeigt eine Induktionsmaschine 2, die mittels eines Umrichters 4 mit einem Versorgungsnetz N verknüpft ist. Als Umrichter 4 kann ein spannungs- oder ein stromeinprägender Umrichter vorgesehen sein. Die Steuersignale $S_v$ für den Umrichter 4 werden in Abhängigkeit einer Frequenz f von einer Regelanordnung 6 generiert. Dieser Regelanordnung 6 ist ein Hochlaufgeber 8 vorgeschaltet, dem eingangsseitig ein Frequenz-Sollwert f* zugeführt ist. Ausgangsseitig ist der Hochlaufgeber 8 außerdem mit einer Vorrichtung 10 zur Durchführung des Blockierdiagnose-Verfahrens verbunden, die ausgangsseitig mit einer Auswerteeinrichtung 12 verbunden ist. Bei einer vorteilhaften Ausführung bildet die Vorrichtung 10 und die Auswerteeinrichtung 12 eine Einrichtung. Ein Istwert-Eingang der Vorrichtung 10 ist mit einer Meßeinrichtung 14 bzw. 16 verknüpft, wobei zum Verständnis des Verfahrens die beiden Meßeinrichtungen 14 und 16 gleichzeitig in dieser Figur dargestellt sind. Eine vorteilhafte Vorrichtung 10 kann jedoch auch zwei Istwert-Eingänge haben, die in Abhängigkeit der Regelungsart des Umrichters 4 freigegeben werden können. Ein Ausgang der Auswerteeinrichtung 12 ist mit einer Anzeige 18 verbunden. Außerdem kann die Auswerteeinrichtung 12 noch mit weiteren Elementen verbunden sein, von denen aus Übersichtlichkeitsgründen nur die Wirkverbindung zum Hochlaufgeber 8 dargestellt ist.

Die Regelanordnung 6 kann als spannungs- oder stromeinprägende Regelanordnung aufgebaut sein. Bei der Regelung mit Spannungsvorgabe wird die Spannung vorgegeben bzw. eingeprägt. Das geschieht mit einem U/f-Kennliniengeber, wobei in Abhängigkeit einer Steuerfrequenz f eine entsprechende Steuerspannung $|u|$ erzeugt wird. Bei einer Regelung mit Stromeinprägung wird der Strom eingeprägt. Diese Regelung weist einen Stromregler auf, der in Abhängigkeit eines Soll- und Iststromes eine Steuerspannung erzeugt. Als Regelanordnung 6 kann auch eine feldorientierte Regelung vorgesehen sein, die eingangsseitig einen Istwertrechner aufweist. Der verwendete Istwertrechner berechnet aus den Zustandsgrößen der Maschine 2 mit Hilfe eines Maschinenmodells die Istwerte, die bei der feldorientierten Regelung benötigt werden.

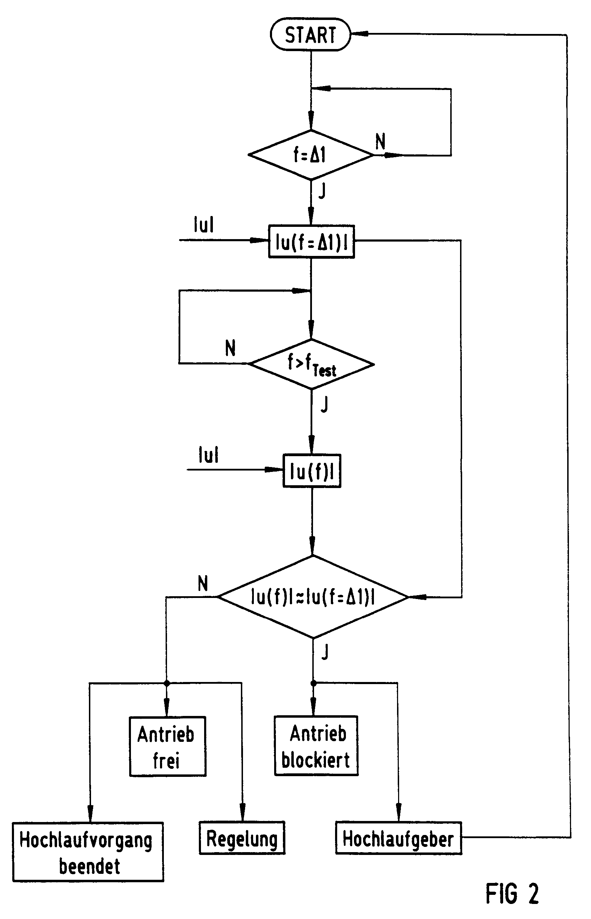

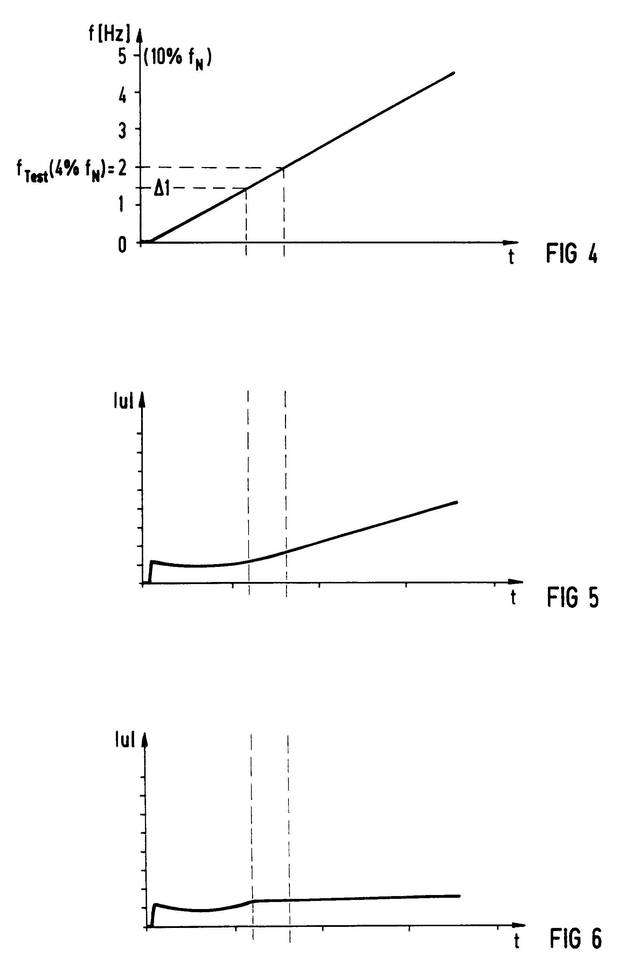

In Figur 2 ist ein erstes Ablaufdiagramm des Blockierdiagnose-Verfahrens im einzelnen dargestellt. Dieses Verfahren kann verwendet werden, wenn die Regelanordnung 6 des Umrichters 4 nach Figur 1 eine Regelvariante verwirklicht, bei der der Strom eingeprägt wird. D.h., mit zunehmender Frequenz f nimmt auch die von der Stromregelung vorgegebene Spannung zu, um bei zunehmender innerer Spannung EMK den Strom konstant zu halten. In der Figur 4 ist der Frequenzverlauf in einem Diagramm über der Zeit t und in der Figur 5 ist der von der Stromregelung vorgegebene spannungsverlauf $|u|$ in einem Diagramm über der Zeit t dargestellt.

Bei einem blockierten Antrieb bleibt die innere Spannung EMK der Maschine 2 trotz steigender Frequenz f konstant. Um konstanten Strom i einzuprägen, muß auch die von der Stromregelung vorgegebene Spannung $|u|$ konstant bleiben. Ein derartiger Spannungsverlauf $|u|$ eines blockierten Antriebs ist in einem Diagramm über der Zeit t in der Figur 6 näher dargestellt.

Mit dem Hochlaufvorgang wird gleichzeitig das Programm "Blockierdiagnose" gestartet. Zunächst wird überprüft, ob die Frequenz f eine vorbestimmte Ansprechschwelle $\Delta1$ überschritten hat. Ist die Ansprechschwelle $\Delta1$ nicht überschritten, verweilt das Programm in dieser Rechenschleife. Ist die Ansprechschwelle $\Delta1$ überschritten, so wird ein erster ermittelter Spannungswert $|u(f=\Delta1)|$ abgespeichert. Danach wird überprüft, ob die Frequenz f eine vorbestimmte Frequenz $f_{Test}$ überschritten hat, wobei der Betrag dieser Frequenz $|f_{Test}|$ größer ist als der Betrag der Ansprechschwelle $|\Delta1|$. Der Wert $|f_{Test}| > |\Delta1|$ dieser Testfrequenz $f_{Test}$ ist abhängig von der umrichtergespeisten Maschine 2. Der Wert kann einige Prozent der Nennfrequenz $f_N$ der Maschine 2 betragen. Den Figuren 4 bis 6 kann entnommen werden, daß der Wert dieser Frequenz $f_{Test}$ 4 % der Nennfrequenz $f_N$ ist. Nachdem die hochlaufende Frequenz f diese Frequenz $f_{Test}$ überschritten hat, wird ein zweiter ermittelter Spannungswert $|u(f_2)|$ abgespeichert. Anschließend werden diese ermittelten Spannungswerte $|u(f=\Delta1|$ und $|u(f_2)|$ ausgewertet. Dabei wird überprüft, ob der zweite ermittelte Spannungswert $|u(f_2)|$ annähernd dem ersten ermittelten Spannungswert $|u(f=\Delta1|$ entspricht. Wird dies verneint, so ist die Maschine 2 dem Frequenz-Sollwert f* gefolgt, d.h., die Maschine 2 ist nicht blockiert. Wird dies bejaht, so ist die Maschine 2 dem Frequenz-Sollwert f* nicht gefolgt, d.h. der Antrieb ist blockiert. Mit der Feststellung, daß der Antrieb nicht blockiert ist, wird auf die Regelung der umrichtergespeisten Induktionsmaschine 2 derart eingewirkt, daß vom gesteuerten in einen geregelten Betrieb umgeschaltet werden kann, da die Maschine dem Sollwert gefolgt ist.

Ist der Antrieb blockiert, so kann auf den Hochlaufgeber 8, wie in Figur 1 mittels einer unterbrochenen Wirklinie angedeutet ist, eingewirkt werden. Diese Einwirkung kann beispielsweise darin bestehen, daß beim Hochlaufgeber 8 ein spezieller Sollkurvenverlauf zum Losbrechen der Maschine 2 aktiviert wird oder der Hochlaufvorgang bei maximalem Moment bzw. größter Hochlaufzeit wiederholt wird. Auf alle Fälle ist es ratsam, diesen Betriebszustand optisch bzw. akustisch anzuzeigen.

Anstelle von Spannungswerten kann auch eine Spannungsänderung $d|u|$ und eine Frequenzänderung df ermittelt werden, die zueinander ins Verhältnis gesetzt werden. Ist dieser Verhältniswert $d|u|/df$ annähernd gleich Null, so ist der Antrieb blockiert.

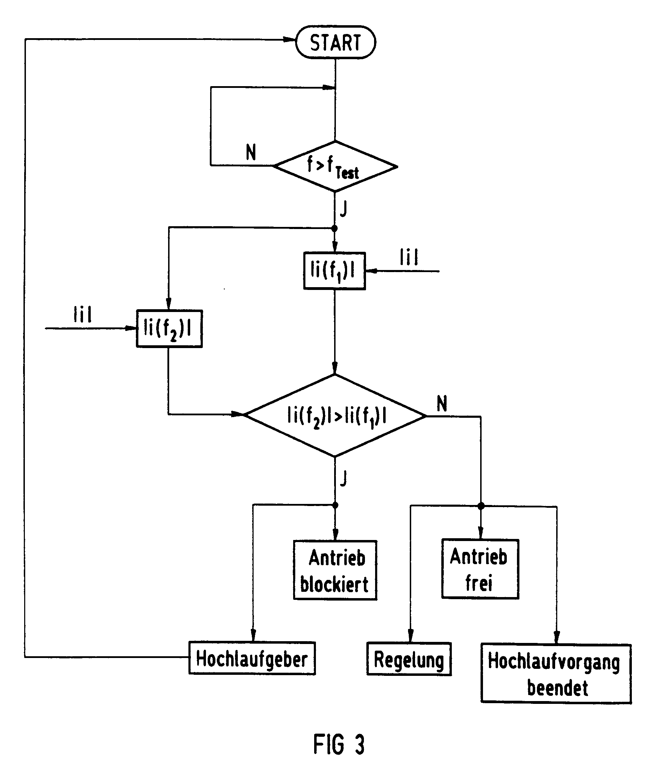

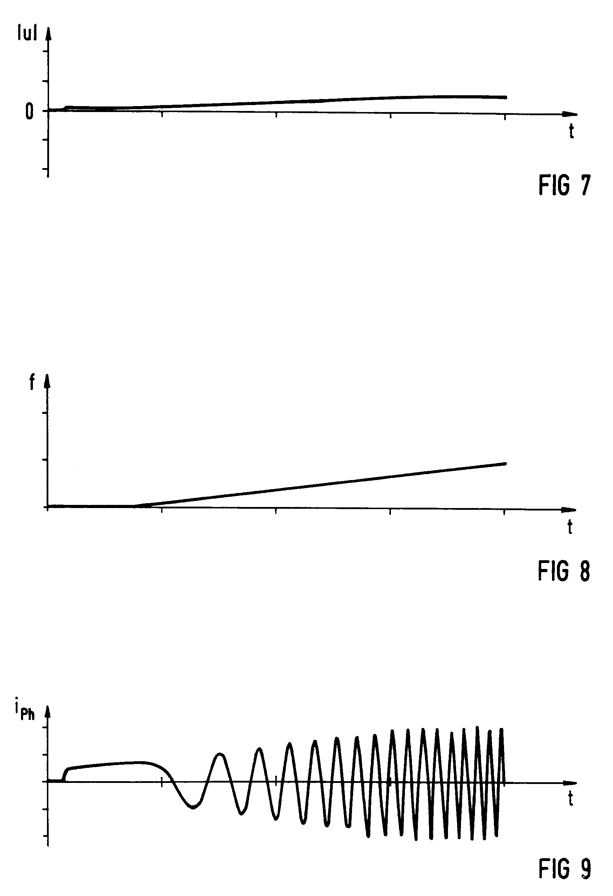

In Figur 3 ist ein weiteres Ablaufdiagramm des Blockierdiagnose-Verfahrens im einzelnen dargestellt. Dieses Verfahren kann verwendet werden, wenn die Regelanordnung 6 des Umrichters 4 nach Figur 1 eine Regelung mit Spannungsvorgabe verwirklicht. D.h., mit steigender Ständerfrequenz f, dargestellt in einem Diagramm über der Zeit t in der Figur 8, steigt auch die von der Spannungssteuerung (U/f-Kennlinie) vorgegebene Ständerspannung u, deren Betragsverlauf $|u|$ in einem Diagramm über der Zeit t in der Figur 7 dargestellt ist. Ist der Antrieb nicht blockiert, steigt ebenfalls die innere Spannung EMK der Maschine 2, um den Maschinenstrom i konstant zu halten.

Bei einem blockierten Antrieb bleibt die innere Spannung EMK der Maschine bei steigender Ständerfrequenz f bzw. steigender Spannung u bzw. $|u|$ konstant, beispielsweise annähernd Null. Wird nun beim blockierten Antrieb die Spannung u bzw. $|u|$ und die Frequenz f erhöht, so steigt wegen der konstanten inneren Spannung EMK der Strom i der Maschine 2 mit der Spannung u bzw. $|u|$ bzw. Frequenz f an. Somit kann man aus den Klemmengrößen der Maschine 2 erkennen, ob der Antrieb blockiert ist.

Nachdem das Programm "Blockierdiagnose" mit dem Hochlaufvorgang gestartet worden ist, wird abgefragt, ob die Frequenz f eine vorbestimmte Frequenz $f_{Test}$ überschritten hat. Wie der Frequenzverlauf f, dargestellt im Diagramm der Figur 8, zeigt, weist der dargestellte Verlauf eine Anlaufphase auf, in der die Steigung des Frequenzverlaufs f allmählich ansteigt. Der Wert dieser Testfrequenz $f_{Test}$ ist abhängig von der umrichtergespeisten Maschine 2. Der Wert kann einige Prozent der Nennfrequenz $f_N$ der Maschine 2 betragen. Solange die hochlaufende Frequenz f während des Hochlaufvorgangs diese eingegebene Frequenz $f_{Test}$ noch nicht überschritten hat, bleibt dieses Programm in dieser Rechenschleife. Übersteigt die hochlaufende Frequenz f diese Frequenz $f_{Test}$, so werden nacheinander wenigstens zwei Betragswerte $|i(f_1)|$, $|i(f_2)|$ des Ständerstromes i ermittelt. Diese ermittelte Klemmengrößen $|i(f_1)|$ und $|i(f_2)|$ werden dahingehend miteinander verglichen, daß, wenn der zweite Wert $|i(f_2)|$ größer als der erste Wert $|i(f_1)|$ ist, angenommen werden kann, daß die Induktionsmaschine 2 aus irgendeinem Grund dem Frequenz-Sollwert f* nicht gefolgt ist, d.h., der Antrieb ist blockiert. Wie bereits erwähnt, bleibt bei einer korrekt eingestellten U/f-Kennlinie der Regelanordnung 6 und nicht blockierten Antrieb der Ständerstrom i bei konstanter Last in etwa konstant. Der Stromverlauf $i_{Ph}$ einer Phase einer blockierten Maschine 2 ist in einem Diagramm über der Zeit t in der Figur 9 dargestellt. Wie zu erkennen ist, wird der Stromanstieg begrenzt, damit die Maschine 2 nicht geschädigt wird.

Liegt nun ein Lastverlauf vor, der gerade einen Stromverlauf zur Folge hat, der linear ansteigt (Stromverlauf ähnlich dem eines blockierten Antriebs), so kann spätestens bei Überschreiten des von der Last her zulässigen Maximalstroms (z.B. Nennstrom der Maschine) o.a. Verfahren zur Erkennung des Blockierzustandes angewandt werden. Ist die Grenze einer eventuell vorhandenen Strombegrenzungsregelung auf denselben Maximalwert eingestellt, so kann das Ansprechen dieser Begrenzung als Indikator verwendet werden, daß der Antrieb blockiert ist bzw. das eingestellte Maximalmoment (Laststrom) nicht zum Beschleunigen des Antriebs ausreicht. Mit der Erkenntnis, daß der Antrieb blockiert ist, kann auf den Hochlaufgeber 8, wie in Figur 1 durch eine unterbrochene Wirklinie angedeutet ist, eingewirkt werden. Diese Einwirkung kann beispielsweise darin bestehen, daß beim Hochlaufgeber 8 ein spezieller Sollkurvenverlauf zum Losbrechen der Maschine 2 aktiviert werden kann oder der Hochlauf bei maximalem Moment bzw. größter Hochlaufzeit wiederholt wird. Auf alle Fälle ist es ratsam, diesen Betriebszustand optisch bzw. akustisch anzuzeigen.

Ist bei der Überprüfung der ermittelten Stromwerte $|i(f_1)|$ und $|i(f_2)|$ herausgekommen, daß sie annähernd gleich sind, wird auf die Regelung dahingehend eingewirkt, daß vom gesteuerten in einen geregelten Betrieb umgeschaltet werden kann, da die Maschine 2 dem Frequenz-Sollwert f* gefolgt ist, wodurch der gesteuerte Hochlaufvorgang beendet ist.

Anstelle der Frequenzwerte $f_1$ und $f_2$ können auch die mittels der U/f-Kennlinie erzeugten Spannungswerte $|u_1|$ und $|u_2|$ für die Überprüfung verwendet werden. In diesem Fall wird die Stromänderung $d|i|$ ins Verhältnis zur Spannungsänderung $d|u|$ gesetzt. Ist dieser Verhältniswert größer Null, so ist der Antrieb blockiert.

Wie die Ausführungen zeigen, erfolgt die beschriebene Überprüfung anhand von Zustandsgrößen des Motors, wobei die verwendeten Zustandsgrößen mittels Plausibilitätsbeziehungen und von der Regelvariante des Umrichters 4 abhängen.

Wird eine Regelanordnung 6 verwendet, die Stellgrößen nach dem feldorientierten Verfahren erzeugt, weist diese Regelanordnung 6 dann einen Istwertrechner auf, an dessen Ausgängen feldorientierte Stromkomponenten $i_1^s$ und $i_2^s$, einen Wert des Flußwinkels $\varepsilon_\phi^s$ (Winkel, der vom Stromzeiger und Flußzeiger eingeschlossen wird) und der Betrag $|e|$ der inneren Spannung EMK anstehen. Auch mittels dieser Größen (Zustandsgrößen der Maschine 2) kann überprüft werden, ob der Antrieb blockiert ist. Damit erkannt werden kann, ob der Antrieb blockiert ist, müssen jeweils folgende Überprüfungskriterien erfüllt werden:

$$i_1^s < k_1 \cdot i_2^s \text{ beispielsweise mit } k_1 = 0,5$$

oder

$$\varepsilon_\phi^s > \varepsilon_{\phi max}^s \text{ beispielsweise mit } \varepsilon_{\phi max}^s = 80°$$

oder

$$|e| < k_2 \cdot \omega \text{ beispielsweise mit } k_2 = 0,5.$$

Mittels dieses Verfahrens kann bei einem Frequenzhochlauf vor der Umschaltung vom gesteuerten in den geregelten Betrieb bereits feststehen, ob der Antrieb einem Sollwert gefolgt ist oder nicht (blockierter Antrieb), wodurch dann eine unnötige Umschaltung, die nur die Maschine 2 belastet, verhindert werden kann. Wenn die Überprüfung bei Frequenzen stattfindet, die kleiner sind als die Kippfrequenz $f_{Kipp}$ der Maschine 2, kann ein Kippen der Maschine 2 völlig verhindert werden.

## EP 0 506 985 B1

### Patentansprüche

1. Blockierdiagnose-Verfahren für eine mit einer stromeinprägenden oder spannungseinprägenden Regelanordnung (6) versehene umrichtergespeiste Induktionsmaschine (2) ohne Drehzahlerfassung, bei dem innerhalb eines durch eine untere und eine obere Frequenz ($f_{Test}$, $f_{Um}$) bestimmten Frequenzbereiches eines Hochlaufvorgangs der Induktionsmaschine (2) anhand wenigstens einer mittels einer Plausibilitätsbeziehung zur geregelten oder gesteuerten Zustandsgröße (i, u) verknüpften ermittelten weiteren Zustandsgröße ($|u|$, $|i|$, $i^s_1$, $i^s_2$, $\varepsilon$, $|e|$) der Induktionsmaschine (2) überprüft wird, ob diese umrichtergespeiste Induktionsmaschine (2) einem Sollwert ($f^*$) gefolgt ist oder nicht, wobei bei positiver Feststellung in einem geregelten Betrieb umgeschaltet und bei negativer Feststellung ein Anzeigesignal generiert wird.

2. Blockierdiagnose-Verfahren nach Anspruch 1, wobei bei dieser Überprüfung die ermittelte Zustandsgröße ($|u(f)|$) mit einer Anfangsgröße ($|u(f=\Delta 1)|$) derart verglichen wird, daß bei Gleichheit das Anzeigesignal generiert wird.

3. Blockierdiagnose-Verfahren nach Anspruch 1, wobei bei dieser Überprüfung ein Zustandsgrößengradient ($d|u|/df$) ermittelt wird, wobei das Anzeigesignal generiert wird, sobald der Wert dieses Gradienten Null ist.

4. Blockierdiagnose-Verfahren nach Anspruch 1, wobei bei dieser Überprüfung zwei nacheinander ermittelte Zustandsgrößen ($|i_1(u_1)|$, $|i_2(u_2)|$) derart überprüft werden, daß, sobald die Zustandsgrößen ($|i_1(u_1)|$, $|i_2(u_2)|$) ungleich sind, das Anzeige-Anzeigesignal generiert wird.

5. Blockierdiagnose-Verfahren nach Anspruch 1, wobei bei dieser Überprüfung ein Zustandsgrößengradient ($d|i|/du$) ermittelt wird, wobei das Anzeigesignal generiert wird, sobald der Wert dieses Gradienten größer Null ist.

6. Vorrichtung (10) zur Durchführung des Verfahrens nach einem der Ansprüche 1 bis 5, für eine mit einer stromeinprägenden oder spannungseinprägenden Regelanordnung (6) versehene umrichtergespeiste Induktionsmaschine (2) ohne Drehzahlerfassung, wobei der Regelanordnung (6) ein Hochlaufgeber (8) vorgeschaltet ist, **dadurch gekennzeichnet**, daß als Vorrichtung (10) ein Mikrocomputer vorgesehen ist, der eingangsseitig einerseits mit dem Ausgang des Hochlaufgebers (8) und andererseits mit einer Meßeinrichtung (14, 16) zur Ermittlung einer Zustandsgröße ($|u|$, $|i|$) der Induktionsmaschine (2) und ausgangsseitig mit einer Auswerteeeinrichtung (12) verknüpft ist.

### Claims

1. Blocking diagnosis method for a converter-fed induction machine (2) provided with a current-injecting or voltage-injecting control arrangement (6) without speed measurement, in which a check is carried out within a frequency range of a starting process of the induction machine (2), determined by a lower and an upper frequency ($f_{Test}$, $f_{Um}$), by means of at least one further status variable ($|u|$, $|i|$, $i^s_1$, $i^s_2$, $\varepsilon$, $|e|$) of the induction machine (2) calculated via a plausibility relationship for the regulated or controlled status variables (i, u), to see whether this converter-fed induction machine (2) follows a setpoint ($f^*$) or not, whereby with a positive conclusion a changeover is made to a regulated mode and with a negative conclusion a display signal is generated.

2. Blocking diagnosis method according to Claim 1, whereby in this check the calculated status variable ($|u(f)|$ is compared to an initial variable ($|u(f=\Delta 1)|$ in such a way that the display signal is generated in the event of equality.

3. Blocking diagnosis method according to Claim 1, whereby in this check a status variable gradient ($d|u|/df$) is determined, whereby the display signal is generated as soon as the value of this gradient is zero.

4. Blocking diagnosis method according to Claim 1, whereby in this check two status variables ($|i_1(u_1)|$, $|i_2(u_2)|$, are examined in such a way that the display signal is generated as soon as the status variables ($|i_1(u_1)|$, $|i_2(u_2)|$ are unequal.

5. Blocking diagnosis method according to Claim 1, whereby in this check a status variable gradient ($d|i|/du$)

6

is determined, whereby the display signal is generated as soon as the value of this gradient is greater than zero.

6. Device (10) for implementing the method according to one of the Claims 1 to 5, for a converter-fed induction machine (2) provided with a current-injecting or a voltage-injecting control arrangement (6) without speed measurement, whereby a ramp-function generator (8) is connected upstream of the control arrangement (6), **characterised in that** a microcomputer is provided as the device (10), whereby on the one hand, this microcomputer is linked at the input side to the output of the ramp-function generator (8) and on the other hand to a measuring device (14, 16) for determining a status variable ($|u|$, $|i|$) of the induction machine (2), and at the output side to an evaluation device (12).

**Revendications**

1. Procédé de diagnostic de blocage pour une machine à induction (2) alimentée par un mutateur et comportant un dispositif de régulation (6) qui injecte un courant ou une tension, sans détection de la vitesse de rotation, selon lequel, à l'intérieur d'une gamme de fréquences déterminée par une fréquence inférieure et une fréquence supérieure ($f_{Test}$, $f_{Um}$) d'une opération de marche à régime élevé de la machine à induction (2), un contrôle est exécuté sur la base d'au moins une autre grandeur d'état déterminée ($|u|$, $|i|$, $i_1^s$, $i_2^s$, $\varepsilon$, $|e|$) de la machine à induction (2), combinée à la grandeur d'état (i,u) réglée ou commandée, au moyen d'une relation de vraisemblance, pour savoir si cette machine à induction (2) alimentée par un onduleur est asservie à une valeur de consigne (f*) ou non et selon lequel, dans le cas d'une réponse positive, le fonctionnement est commuté sur un fonctionnement réglé et dans le cas d'une réponse négative, un signal indicateur est produit.

2. Procédé de diagnostic de blocage suivant la revendication 1, selon lequel, lors de ce contrôle, la grandeur d'état déterminée ($|u(f)|$) est comparée à une grandeur initiale ($|u(f=\Delta 1)|$) de manière que le signal indicateur est produit en cas d'égalité.

3. Procédé de diagnostic de blocage suivant la revendication 1, selon lequel, lors de ce contrôle, un gradient ($d|u|/df$) de la grandeur d'état est déterminé, et le signal indicateur est produit dès que la valeur de ce gradient est nul.

4. Procédé de diagnostic de blocage suivant la revendication 1, selon lequel, lors de ce contrôle, deux grandeurs d'état déterminées successivement ($|i_1(u_1)|$, $|i_2(u_2)|$) sont contrôlées de telle manière que, dès que les grandeurs d'état ($|i_1(u_1)|$, $|i_2|(u_2)|$) sont différentes, le signal indicateur est produit.

5. Procédé de diagnostic de blocage suivant la revendication 1, selon lequel, lors de ce contrôle, un gradient ($d|i|/du$) de la grandeur d'état est déterminé, et le signal indicateur est produit dès que la valeur de ce gradient est supérieure à zéro.

6. Dispositif (10) pour la mise en oeuvre du procédé suivant l'une des revendications 1 à 5, pour une machine à induction (2) alimentée par un onduleur et équipée d'un dispositif de régulation (6) injectant un courant ou une tension, sans détection de la vitesse de rotation, dans lequel un indicateur de marche à régime élevé (8) débranché en amont du dispositif de régulation (6), caractérisé par le fait qu'il est prévu, en tant que dispositif (10), un micro-ordinateur qui est relié, côté entrée, d'une part, à la sortie de l'indicateur de marche à régime élevé (8) et, d'autre part, à un dispositif de mesure (14,16) servant à déterminer une grandeur d'état ($|u|$, $|i|$) de la machine d'induction (2) et, côté sortie, un dispositif d'évaluation (12).

FIG 1

FIG 2

START

N ← $f > f_{Test}$

J

$|i(f_1)|$ ← $|i|$

$|i| → |i(f_2)|$

$|i(f_2)| > |i(f_1)|$ → N

J

Antrieb blockiert

Antrieb frei

Hochlaufgeber

Regelung

Hochlaufvorgang beendet

FIG 3

FIG 4

FIG 5

FIG 6

|u|

0

t

FIG 7

f

t

FIG 8

i_Ph

t

FIG 9